# EUROPÄISCHE PATENTSCHRIFT

(11) **EP 0 871 912 B1**
(45) Veröffentlichungstag und Bekanntmachung des Hinweises auf die Patenterteilung: **15.01.2003**
(21) Anmeldenummer: 95935346.7
(22) Anmeldetag: 21.10.1995
(51) Int. Cl.: G02B 21/00, G02B 26/10

(54) **STRAHLSCANNER FÜR KONFOKALE MIKROSKOPE**
BEAM SCANNER FOR CONFOCAL MICROSCOPES
SCANNER A FAISCEAU POUR MICROSCOPE CONFOCAL

(30) Priorität: 22.10.1994 DE 4437896
(43) Veröffentlichungstag der Anmeldung: 21.10.1998
(73) Patentinhaber: Leica Microsystems Heidelberg GmbH, 69120 Heidelberg (DE)
(72) Erfinder: WIJNAENDTS VAN RESANDT, Roelof, W., D-76669 Bad Schönborn (DE); JEHLE, Joachim, D-69121 Heidelberg (DE); ENGELHARDT, Johann, D-76669 Bad Schönborn (DE)
(74) Vertreter: Naumann, Ulrich, Dr.-Ing.
(86) Internationale Anmeldenummer: DE9501463
(87) Internationale Veröffentlichungsnummer: WO96012982

(56) Entgegenhaltungen:
- EP-A- 0 539 691
- WO-A-91/13379
- DE-A- 4 207 760

## Beschreibung

Die Erfindung betrifft eine Scan-Vorrichtung für konfokale Mikroskope mit mindestens einer Lichtquelle, einem Okular und einem Strahlscanner mit einer drehangetriebenen Scheibe als Grundkörper, wobei zumindest eine Hauptoberfläche der Scheibe mit einem Reflexionsraster versehen ist, wobei entweder nur die den Maschen des Reflexionsrasters entsprechenden Bereiche oder nur die dem Gitter des Reflexionsrasters entsprechenden Bereiche der Hauptoberfläche Licht reflektieren.

Aus der DE 42 07 760 A1 ist eine Vorrichtung zur Beobachtung des Auges bekannt. In einer ersten Ausführungsform wird das zur Beleuchtung des Auges dienende Licht einer Lichtquelle durch eine drehangetriebene Nipkow-Scheibe geleitet. Diese Nipkow-Scheibe weist eine Vielzahl von spiralförmig angeordneten Löchern auf, durch die das Beleuchtungslicht durchtritt. Das vom Auge reflektierte Licht durchläuft in entgegengesetzter Richtung den optischen Strahlengang und passiert die rotierende Nipkow-Scheibe, um von einem Detektor nachgewiesen zu werden. In einer zweiten Ausführungsform wird anstelle der herkömmlichen Nipkow-Scheibe eine teilweise reflektierende Nipkow-Scheibe eingesetzt. Diese ist in Form einer invertierten Lochmaske mit einer Vielzahl von spiegelnden Punkten und transparenten Zwischenräumen ausgestaltet. Das Licht zur Beleuchtung des Auges wird in Richtung der modifizierten Nipkow-Scheibe geleitet, wobei das Beleuchtungslicht durch die transparenten Zwischenräume hindurchtritt. Das vom Auge reflektierte Licht verläuft in entgegengesetzter Richtung zu der modifizierten Nipkow-Scheibe, wo ein Teil des Lichts durch die transparenten Zwischenräume der Nipkow-Scheibe hindurchtritt, um von einem Detektor nachgewiesen zu werden. Das vom Auge reflektierte Licht, das auf die spiegelnden Punkte der modifizierten Nipkow-Scheibe auftrifft wird von der modifizierten Nipkow-Scheibe reflektiert und von einem zusätzlichen Detektor nachgewiesen.

Scan-Vorrichtungen der gattungsbildenden Art werden bereits seit einigen Jahren in der Konfokalmikroskopie verwendet. Bei dem konfokalen Verfahren der mikroskopischen Abbildung werden nur diejenigen Strukturen eines Objekts abgebildet, die sich unmittelbar in der Brennebene des Mikroskopobjektivs befinden. In einer konfokalen optischen Anordnung wird das Objekt in der Brennebene des Objektivs durch eine Punktlichtquelle beleuchtet. Das vom Objekt stammende Licht wird durch einen Strahlteiler in Richtung eines Punktlichtdetektors reflektiert und nachgewiesen. Punktlichtquelle, Punktlichtdetektor und der am Objekt in der Brennebene beugungsbegrenzte Lichtpunkt liegen dabei exakt in den optisch konjugierten Punkten. Licht, das von außerhalb der Brennebene stammt, wird nicht scharf am Punktlichtdetektor fokussiert und deshalb vom Detektor auch nicht registriert. Dadurch gibt es keine Beiträge von unscharfen Objektteilen. Objektteile, die außerhalb der Brennebene liegen, werden also quasi ausgeblendet. Lichtquelle und Punktlichtdetektor realisiert man in der Praxis durch sehr kleine Lochblenden. Um nun ein dreidimensionales Bild von einem Objekt zu erzeugen, muss der Lichtpunkt in geeigneter Weise relativ zum Objekt geführt werden. Eine Möglichkeit dafür besteht in der Verwendung eines Mehrpunkt-Strahlscanners in Form einer Nipkov-Scheibe. Es handelt sich dabei um eine mit einem Elektromotor angetriebene Scheibe, die ein Raster von Lochblenden, sogenannten Pinholes, aufweist.

Ein in der Praxis auftretendes Problem bei der Verwendung der bekannten Scheibenscanner besteht in von der Scheibenoberfläche rückreflektiertern Licht, das in das Okular einfällt und die Abbildung des Objekts überstrahlt oder zumindest erheblich beeinträchtigt. Die Vermeidung derartiger Streulichteffekte erfordert oft einen erheblichen apparativen Aufwand. Außerdem erfordert die Verwendung einer Nipkov-Scheibe als Strahlscanner eine relativ aufwendige Zusatzoptik bedingt durch die an Lochblenden auftretenden Beugungserscheinungen.

Der Erfindung liegt nun die Aufgabe zugrunde, eine Scan-Vorrichtung für konfokale Mikroskope der eingangs genannten Art anzugeben, die auf einfache Weise an ein konventionelles Mikroskop adaptiert werden kann, eine kontrastreiche Abbildung ermöglicht und die oben genannten Probleme weitgehend löst

Die erfindungsgemäße Scan-Vorrichtung für konfokale Mikroskope löst die voranstehende Aufgabe durch die Merkmale des Patentanspruchs 1. Danach ist die eingangs genannte Scan-Vorrichtung derart ausgebildet, dass die Lichtquelle, die Scheibe und das Okular derart angeordnet sind, dass sowohl das zur Beleuchtung eines Objekts dienende Licht einer Lichtquelle als auch das vom Objekt zum Okular kommende Licht an dem Strahlscanner reflektiert wird.

Weitere Ausführungsformen der Erfindung sind in den abhängigen Ansprüchen definiert.

Erfindungsgemäß ist erkannt worden, dass wesentlich für die Wirkungsweise eines Strahlscanners einer Scan-Vorrichtung die Realisierung einer Punktlichtquelle bzw. eines Punktlichtdetektors ist.

Der Strahlscanner einer erfindungsgemäßen Scan-Vorrichtung läßt sich genauso wie die bekannte Nipkov-Scheibe als Punktlichtquelle und Punktlichtdetektor verwenden.

Anstelle einer rasterartigen Anordnung von Lochblenden im Grundkörper weist eine Hauptoberfläche des Strahlscanners der erfindungsgemäßen Scan-Vorrichtung ein Reflexionsraster auf. Üblicherweise besteht ein Raster aus einem Gitter und den von diesem Gitter gebildeten Maschen. Im folgenden wird - lediglich zur Vereinfachung der Erläuterungen - immer vorausgesetzt, dass nur die den Maschen des Reflexionsrasters entsprechenden Bereiche Licht reflektieren, obwohl grundsätzlich auch nur die dem Gitter entsprechenden Bereiche Licht reflektieren könnten.

Je nach Auslegung des Reflexionsrasters können die einzelnen Maschen enger oder weiter beieinander liegen, was sich auf das Signal/Rausch-Verhältnis auswirkt, da durch jede Masche auch ein kleiner Teil des Lichts der jeweils benachbarten Maschen aus unscharfen Objektbereichen detektiert wird. Auch das Auflösungsvermögen hängt von der Ausgestaltung des Reflexionsrasters, nämlich von der Geometrie der einzelnen Maschen ab. Als in der Praxis vorteilhaft haben sich punktförmig runde, ovale oder eckige Maschen erwiesen. Denkbar sind auch streifenförmige oder linienförmige Maschen in Analogie zu den bekannten Spaltscannem. Zur Minimierung von Streulicht wird vorgeschlagen, das Reflexionsraster als Streifenmuster auszubilden. Für eine gleichmäßige Bildausleuchtung wird vorgeschlagen, die Muster spiralförmig auszubilden.

Neben den verschiedenen Möglichkeiten der geometrischen Auslegung des Reflexionsrasters besteht auch die Möglichkeit, dass das Reflexionsraster farbselektive Eigenschaften hat, indem es nur Licht eines bestimmten Wellenlängenbereichs reflektiert. Insbesondere im Rahmen der Mikroskopie von fluoreszenzmarkierten Strukturen ist die Verwendung von Licht bestimmter Wellenlängenbereiche vorteilhaft, da die fluoreszenzmarkierten Strukturen nur von Licht bestimmter Wellenlänge angeregt werden. In diesem Zusammenhang hat sich gezeigt, dass sich auch die Spotgröße, d.h. die Größe der reflektierenden Maschen, einfach in Abhängigkeit von der Wellenlänge des einfallenden Lichts variieren läßt, wenn die Maschen des Reflexionsrasters jeweils mehrere Reflexionsbereiche mit unterschiedlichen farbselektiven Eigenschaften umfassen. In vorteilhafter Weise sind diese Reflexionsbereiche der einzelnen Maschen konzentrisch bzw. symmetrisch angeordnet. Reflektiert beispielsweise der innere Reflexionsbereich einer Masche sowohl kurzwelliges als auch langwelliges Licht und der äußere Reflexionsbereich ausschließlich langwelliges Licht, so läßt sich für langwelliges Licht eine größere Spotgröße realisieren als für kurzwelliges Licht. Bei der Optimierung der Bildqualität muss neben der Objektiwergrößerung und dem Auflösungsvermögen des Objektivs immer berücksichtigt werden, dass zwar die Lichtausbeute um so größer ist, je größer der reflektierende Spot ist, dass dabei aber die Auflösung schlechter wird.

In konfokalen Mikroskopen werden häufig Wechselobjekte mit verschiedenen Objektiwergrößerungen verwendet. Es hat sich gezeigt, dass besonders gute Objektabbildungen erzielt werden können, wenn das Rastermaß des Strahlscanners auf die Objektiwergrößerung abgestimmt ist. In einer vorteilhaften Ausgestaltung des Strahlscanners der erfindungsgemäßen Scan-Vorrichtung weist die Hauptoberfläche des Grundkörpers daher mehrere Zonen, vorzugsweise mehrere Ringzonen, mit verschiedenen Reflexionsrastem auf. Die Unterschiede können sich dabei auf das Rastermaß und/oder auf die farbselektiven Eigenschaften der Reflexionsraster beziehen.

Es gibt nun verschiedene Möglichkeiten der konstruktiven Realisierung eines Strahlscanners der erfindungsgemäßen Scan-Vorrichtung. In einer vorteilhaften Ausgestaltung besteht der Grundkörper aus einem im wesentlichen transparenten Material .. vorzugsweise aus einer entspiegelten Glas- oder Quarzscheibe. Die Entspiegelung dient dabei zur Vermeidung von unerwünschten Rückreflexionen. Eine andere Möglichkeit besteht in der Verwendung eines Grundkörpers mit einem relativ großen Absorptionsvermögen. Das Absorptionsvermögen muss so groß sein, dass lediglich am Reflexionsraster der Hauptoberfläche des Grundkörpers Licht reflektiert wird.

Besonders vorteilhaft ist es, das Reflexionsraster als Beschichtung der Hauptoberfläche der Scheibe auszuführen. Aus der Praxis sind bereits vielfältige Verfahren zum Aufbringen von dünnen Schichten auf entsprechende Grundkörper bekannt. Beispielhaft sei an dieser Stelle das Aufdampfen und Aufsputtern von dünnen Schichten genannt, in die anschließend beispielsweise in einem photolithographischen Ätzverfahren das Refle-xionsraster eingebracht werden kann. Eine andere Möglichkeit besteht in der Verwendung von Masken während des Aufdampfens oder Aufsputtems einer dünnen Schicht. Entsprechend können die Maschen des Reflexionsrasters also jeweils als für Licht eines bestimmten Wellenlängenbereichs transparenter und ansonsten reflektierender Beschichtungsfleck ausgeführt sein. In vorteilhafter Weise sind die Maschen des Reflexionsrasters durch mehrere für Licht unterschiedlicher Wellenlängenbereiche transparente, überlappende Beschichtungsflecken gebildet, wobei die Beschichtungsflecken der einzelnen Maschen vorzugsweise zentriert übereinander auf die Scheibe aufgebracht sind. In einer konkreten, besonders vorteilhaften Ausgestaltung eines derartigen Strahlscanners sind die einzelnen Maschen durch jeweils zwei zentriert übereinander aufgebrachte Beschichtungsflecken gebildet, wobei der erste auf die Scheibe aufgebrachte Beschichtungsfleck für kurzwelliges Licht transparent ist und langwelliges Licht reflektiert, während der zweite Beschichtungsfleck kurzwelliges und langwelliges Ucht reflektiert und kleiner als der erste Beschichtungsfleck ausgebildet ist.

Die erfindungsgemäße Scan-Vorrichtung für konfokale Mikroskope wird mit mindestens einer Lichtquelle, einem Okular und dem Strahlscanner vorgeschlagen, die zusätzlich mindestens einen strahlablenkenden optischen Baustein umfasst, der entweder im Strahlengang zwischen der Lichtquelle und dem Okular einerseits und dem Strahlscanner andererseits oder aber zwischen dem Strahlscanner und dem zu untersuchenden Objekt angeordnet sein kann. Daneben besteht die Möglichkeit auch mehrere strahlablenkende optische Bausteine an unterschiedlichen Positionen im Strahlengang anzuordnen. Dieser strahlablenkende optische Baustein kann beispielsweise einen Spiegel oder dichroitischen Strahlteiler oder auch eine Linsenanordnung oder eine Kombination all dieser Elemente umfassen. Vorteilhaft kann auch die Verwendung eines verspiegelten Prismas sein, das derart im Strahlengang angeordnet werden könnte, dass eine erste reflektierende Oberfläche im Strahlengang zwischen der Lichtquelle und dem Okular einerseits und dem Strahlscanner andererseits und eine zweite reflektierende Oberfläche zwischen dem Strahlscanner und dem zu untersuchenden Objekt angeordnet ist.

Bei Scan-Vorrichtungen mit Strahlscannem, die mehrere Zonen mit unterschiedlichen Reflexionsrastem aufweisen, ist es sinnvoll, wenn die Position des Strahlscanners innerhalb der optischen Anordnung so veränderbar ist, dass wahlweise eines der Reflexionsraster im Strahlengang angeordnet ist.

In einer ganz besonders vorteilhaften Variante ist die vorgeschlagene Scan-Vorrichtung als Zusatzmodul mit einem Gehäuse für konventionelle Mikroskope konzipiert. Derartige Mikroskope können also mit der vorgeschlagenen Scan-Vorrichtung einfach für die konfokale Mikroskopie umgerüstet bzw. ausgerüstet werden.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung anhand der Zeichnung werden auch im allgemeinen bevorzugte Ausgestaltungen und Weiterbildungen der Lehre erläutert. In der Zeichnung zeigt
- Fig. 1: in schematischer Darstellung, einen konfokalen Scheibenscanner in Reflexionsanordnung im Rahmen einer erfindungsgemäßen Scan-Vorrichtung für ein Mikroskop und
- Fig. 2: in schematischer Schnittdarstellung den Aufbau des in Fig. 1 dargestellten Strahlscanners einer erfindungsgemäßen Scan-Vorrichtung.

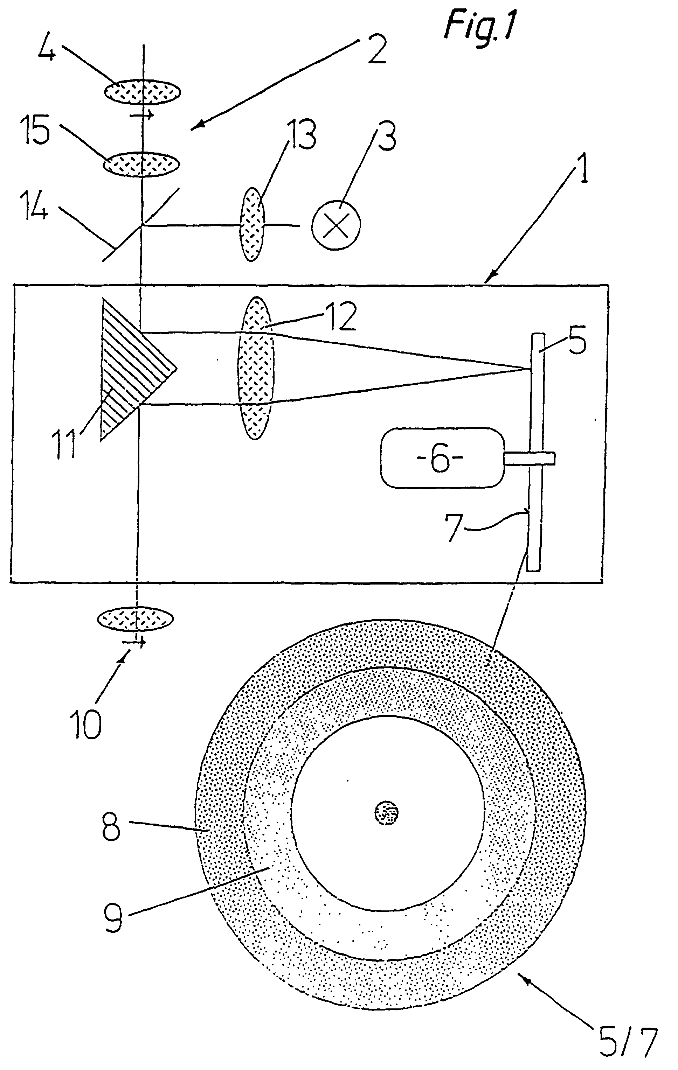

Fig. 1 zeigt eine erfindungsgemäße Scan-Vorrichtung 1 für ein konfokales Mikroskop 2, die eine Lichtquelle 3 und ein Okular 4 umfasst. Wesentlicher Bestandteil der Scan-Vorrichtung 1 ist ein Strahlscanner 5, der in Fig. 1 nochmals für sich, in Aufsicht dargestellt ist. Der Strahlscanner 5 umfasst eine mit Hilfe eines Motors 6 drehangetriebenen Scheibe 5 als Grundkörper.

Eine Hauptoberfläche 7, nämlich die in Fig. 1 dargestellte Hauptoberfläche 7, ist mit einem Reflexionsraster 8, 9 versehen. Das Reflexionsraster 8, 9 besteht aus einem Gitter und entsprechend von diesem gebildeten Maschen. Im hier dargestellten Ausführungsbeispiel reflektieren ausschließlich die den Maschen entsprechende Bereiche der Hauptoberfläche 7 Licht.

In dem hier dargestellten Ausführungsbeispiel weist die Hauptoberfläche 7 des Grundkörpers 5 mehrere Ringzonen mit verschiedenen Reflexionsrastern 8 und 9 auf. Die Reflexionsraster 8, 9 unterscheiden sich zwar nicht wesentlich in der Form ihrer punktförmigen Maschen jedoch erheblich im Rastermaß, d.h. in der Maschengröße und in den Maschenabständen. So sind die Maschen des Reflexionsrasters 9 in der inneren Ringzone erheblich kleiner als die Maschen des Reflexionsrasters 8 in der äußeren Ringzone.

Außerdem können sich die Reflexionsraster 8 und 9 auch in ihren farbselektiven Eigenschaften unterscheiden, indem die Reflexionsraster 8 und 9 jeweils Licht eines bestimmten, und zwar unterschiedlichen, Wellenlängenbereichs reflektieren.

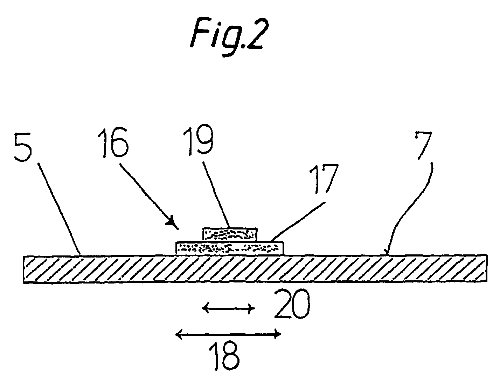

Der Grundkörper 5 des hier dargestellten Strahlscanners 5 besteht aus einem im wesentlichen transparenten Material, und zwar einer entspiegelten Glasscheibe. Die Reflexionsraster 8 und 9 sind als Beschichtung der dargestellten Hauptoberfläche 7 der Scheibe 5 ausgeführt, was in Verbindung mit Fig. 2 noch näher erläutert wird.

Neben dem Strahlscanner 5 umfasst die erfindungsgemäße Scan-Vorrichtung 1 noch einen strahlablenkenden optischen Baustein, der hier im Strahlengang zwischen der Lichtquelle 3 und dem Okular 4 einerseits und dem Strahlscanner 5 andererseits sowie zwischen dem Strahlscanner 5 und einem zu untersuchenden Objekt 10 angeordnet ist. Als strahlablenkender Baustein dient in dem hier dargestellten Ausführungsbeispiel ein verspiegeltes Prisma 11 in Verbindung mit einer Linse 12.

Mit Hilfe der Scan-Vorrichtung 1 wird das von der Lichtquelle 3 ausgehende Licht zunächst über eine Linse 13 und einen dichroitischen Strahlteiler 14 auf eine Oberfläche des verspiegelten Prismas 11 gelenkt. Diese reflektiert den Lichtstrahl, welcher über die Linse 12 auf die mit dem Reflexionsraster 8 bzw. 9 versehene Hauptoberfläche 7 des Strahlscanners 5 gelenkt wird. Durch Reflexion an der Hauptoberfläche 7 des Strahlscanners 5 und über die Linse 12 und weitere Reflexion an einer zweiten Oberfläche des verspiegelten Prismas 11 gelangt das vom Strahlscanner 5 reflektierte Licht schließlich zum Objekt 10. Entsprechend umgekehrt verläuft der Strahlengang des vom Objekt 10 reflektierten Lichts, nur dass dieses Licht durch den dichroitischen Strahlteiler 14 über eine Linse 15 zum Okular 4 gelangt. Der Strahlscanner 5 dient hier also sowohl als Punktlichtquelle als auch als Punktlichtdetektor.

In Verbindung mit der Figur 1 sei darauf hingewiesen, dass die Scan-Vorrichtung 1 in vorteilhafter Weise als Zusatzmodul mit einem Gehäuse, was hier angedeutet ist, für konventionelle Mikroskope konzipiert sein kann.

Fig. 2 zeigt eine Möglichkeit der Realisierung eines Strahlscanners, wie er erfindungsgemäß vorgeschlagen wird. In dem hier dargestellten Ausführungsbeispiel umfasst der Strahlscanner einen Grundkörper 5 aus einem transparenten Material, nämlich aus entspiegeltem Glas. Das Reflexionsraster bzw. die einzelnen Maschen 16 des Reflexionsrasters sind als Beschichtung der Hauptoberfläche 7 des Grundkörpers 5 ausgeführt. Hier ist beispielhaft lediglich eine Masche 16 dargestellt. Die Masche 16 ist durch zwei zentriert übereinander aufgebrachte Beschichtungsflecken 17 und 19 gebildet. Der erste auf der Scheibe 5 aufgebrachte Beschichtungsfleck 17 weist einen größeren Reflexionsdurchmesser auf als der zweite Beschichtungsfleck 19, was durch die Doppelpfeile 18 und 20 verdeutlicht wird. Der erste Beschichtungsfleck 17 ist für kurzwelliges Licht transparent und reflektiert langwelliges Licht, während der zweite Beschichtungsfleck 19 kurzwelliges und langwelliges Licht reflektiert. Die beiden Beschichtungsflecken 17 und 19 sind zentriert übereinander auf den Grundkörper 5 aufgebracht. Mit Hilfe des in Fig. 2 dargestellten Reflexionsrasters lassen sich besonders gut unterschiedliche Spotgrößen bzw. Maschengrößen für kurzwelliges und langwelliges Licht realisieren.

Hinsichtlich weiterer, in den Figuren nicht dargestellter Merkmale des Strahlscanners der vorgeschlagenen erfindungsgemäßen Scan-Vorrichtung wird auf den allgemeinen Teil der Beschreibung verwiesen.

Abschließend sei darauf hingewiesen, dass die Erfindung keinesfalls auf das in den Figuren dargestellte und erläuterte Ausführungsbeispiel beschränkt ist. Die Lehre der vorliegenden Erfindung läßt sich auch durch konstruktiv anders ausgestaltete Strahlscanner und Reflexionsraster mit anders gearteten Geometrien realisieren, sofern sie unter den Schutzumfang der Patentansprüche fallen.

## Patentansprüche

1. Scan-Vorrichtung (1) für konfokale Mikroskope (2) mit mindestens einer Lichtquelle (3), einem Okular (4) und einem Strahlscanner mit einer drehangetriebenen Scheibe (5) als Grundkörper, wobei zumindest eine Hauptoberfläche (7) der Scheibe (5) mit einem Reflexionsraster (8, 9) versehen ist, wobei entweder nur die den Maschen des Reflexionsrasters (8, 9) entsprechenden Bereiche oder nur die dem Gitter des Reflexionsrasters (8, 9) entsprechenden Bereiche der Hauptoberfläche (7) Licht reflektieren,
**dadurch gekennzeichnet, dass** die Lichtquelle (3), die Scheibe (5) und das Okular (4) derart angeordnet sind, dass sowohl das zur Beleuchtung eines Objekts (10) dienende Licht der Lichtquelle (3) als auch das vom Objekt (10) zum Okular (4) kommende Licht an dem Strahlscanner reflektiert wird.

2. Scan-Vorrichtung nach Anspruch 1, **dadurch gekennzeichnet, daß** die Maschen des Reflexionsrasters (8, 9) punktförmig rund, oval oder eckig sind.

3. Scan-Vorrichtung nach Anspruch 1, **dadurch gekennzeichnet, daß** die Maschen des Reflexionsrasters streifenförmig oder linienförmig sind.

4. Scan-Vorrichtung nach einem der Ansprüche 1 bis 3, **dadurch gekennzeichnet, daß** das Reflexionsraster spiralförmig angeordnet ist.

5. Scan-Vorrichtung nach einem der Ansprüche 1 bis 4, **dadurch gekennzeichnet, daß** das Reflexionsraster (8, 9) farbselektive Eigenschaften hat, indem es nur Licht eines bestimmten Wellenlängenbereichs oder mehrerer bestimmter Wellenlängenbereiche reflektiert.

6. Scan-Vorrichtung nach Anspruch 5, **dadurch gekennzeichnet, daß** die Maschen (16) des Reflexionsrasters (8, 9) jeweils mehrere Reflexionsbereiche mit unterschiedlichen farbselektiven Eigenschaften umfassen.

7. Scan-Vorrichtung nach Anspruch 6, **dadurch gekennzeichnet, daß** die Reflexionsbereiche der einzelnen Maschen (16) konzentrisch bzw. rotations symmetrisch angeordnet sind.

8. Scan-Vorrichtung nach einem der Ansprüche 1 bis 7, **dadurch gekennzeichnet, daß** die Hauptoberfläche (7) der Scheibe (5) mehrere Zonen mit verschiedenen Reflexionsrastern (8, 9) aufweist.

9. Scan-Vorrichtung nach Anspruch 8, **dadurch gekennzeichnet, daß** die Hauptoberfläche (7) der Scheibe (5) mehrere Ringzonen mit verschiedenen Reflexionsrastern (8, 9) aufweist.

10. Scan-Vorrichtung nach einem der Ansprüche 1 bis 9, **dadurch gekennzeichnet, daß** die Scheibe (5) aus einem transparenten Material gebildet ist.

11. Scan-Vorrichtung nach Anspruch 10, **dadurch gekennzeichnet, daß** als Scheibe (5) eine entspiegelte Glas- oder Quarzscheibe dient.

12. Scan-Vorrichtung nach einem der Ansprüche 1 bis 9, **dadurch gekennzeichnet, daß** das Absorptionsvermögen der Scheibe (5) so groß ist, daß lediglich am Reflexionsraster (8, 9) der Hauptoberfläche (7) Licht reflektiert wird.

13. Scan-Vorrichtung nach einem der Ansprüche 1 bis 12, **dadurch gekennzeichnet, daß** das Reflexionsraster (8, 9) als Beschichtung der Hauptoberfläche (7) der Scheibe (5) ausgeführt ist.

14. Scan-Vorrichtung nach Anspruch 13, **dadurch gekennzeichnet, daß** die Maschen (16) des Reflexionsrasters (8, 9) jeweils als für Licht eines bestimmten Wellenlängenbereichs transparenter und ansonsten reflektierender Beschichtungsfleck (17, 19) ausgeführt sind.

15. Scan-Vorrichtung nach Anspruch 14, **dadurch gekennzeichnet, daß** die Maschen (16) des Reflexionsrasters (8, 9) durch mehrere für Licht unterschiedlicher Wellenlängenbereiche transparente und ansonsten reflektierende, überlappende Beschichtungsflecken (17, 19) gebildet sind.

16. Scan-Vorrichtung nach Anspruch 15, **dadurch gekennzeichnet, daß** die Beschichtungsflecken (17, 19) der einzelnen Maschen (16) zentriert übereinander auf die Scheibe (5) aufgebracht sind.

17. Scan-Vorrichtung nach einem der Ansprüche 14 bis 16, **dadurch gekennzeichnet, daß** die einzelnen Maschen (16) durch jeweils zwei zentriert übereinander aufgebrachte Beschichtungsflecken (17, 19) gebildet sind, wobei der erste auf die Scheibe (5) aufgebrachte Beschichtungsfleck (17) für kurzwelliges Licht transparent ist und langwelliges Licht reflektiert, während der zweite Beschichtungsfleck (19) kurzwelliges und langwelliges Licht reflektiert und kleiner als der erste Beschichtungsfleck (17) ausgebildet ist.

18. Scan-Vorrichtung nach einem der Ansprüche 1 bis 17, **dadurch gekennzeichnet, daß** mindestens ein strahiablenkender optischer Baustein (11) im Strahlengang zwischen der Lichtquelle (3) und dem Okular (4) einerseits und dem Strahlscanner (5) andererseits oder zwischen dem Strahlscanner (5) und dem zu untersuchenden Objekt (10) angeordnet ist.

19. Scan-Vorrichtung nach Anspruch 18, **dadurch gekennzeichnet, daß** der strahlablenkende optische Baustein einen Spiegel, einen dichroitischen Strahlteiler und/oder eine Linsenanordnung (12) umfaßt.

20. Scan-Vorrichtung nach Anspruch 19, **dadurch gekennzeichnet, daß** der zum Strahlscanner (5) laufende und der vom Strahlscanner (5) reflektierte Strahl dieselbe Linsenanordnung (12) passiert.

21. Scan-Vorrichtung nach einem der Ansprüche 18 bis 20, **dadurch gekennzeichnet, daß** der strahlablenkende optische Baustein ein verspiegeltes Prisma (11) umfaßt, das derartig angeordnet ist, daß eine erste reflektierende Oberfläche im Strahlengang zwischen der Lichtquelle (3) und dem Okular (4) einerseits und dem Strahlscanner (5) andererseits und eine zweite reflektierende Oberfläche zwischen dem Strahlscanner (5) und dem zu untersuchenden Objekt (10) angeordnet ist.

22. Scan-Vorrichtung nach einem der Ansprüche 18 bis 21, **dadurch gekennzeichnet, daß** die Position des Strahlscanners (5) innerhalb der Scan-Vorrichtung (1) veränderbar ist.

23. Scan-Vorrichtung nach einem der Ansprüche 18 bis 22, **dadurch gekennzeichnet, daß** sie als Zusatzmodul mit einem Gehäuse für konventionelle Mikroskope konzipiert ist.

24. Scan-Vorrichtung nach einem der Ansprüche 18 bis 23, **dadurch gekennzeichnet, daß** hinter der Scheibe (5) eine Lichtfalle bzw. ein Absorber für durch die Scheibe (5) transmittiertes Licht vorgesehen ist.

## Claims

1. Scanning device (1) for confocal microscope with at least one light source (3), an eyepiece (4) and a rotary - drive disk (5) as a base, wherein at least one main upper surface (7) of the disk (5) is provided with a reflection raster (8, 9) in which either only the areas corresponding to the meshes of the reflection raster (8, 9) or only the areas corresponding to the grid of the reflection raster (8, 9) reflect light, **characterized in that** the light source (3), the disk (5) and the eyepiece (4) are arranged so that light of the light source (3) used for the illumination of the object (10) and the light coming from the object (10) to the eyepiece (4) are reflected at the beam scanner.

2. Scanning device in accordance with Claim 1, **characterized in that** the meshes of the reflection raster (8, 9) are in the form of round, oval, or angular points.

3. Scanning device in accordance with Claim 1, **characterized in that** the meshes of the reflection raster (8, 9) are in the form of stripes or lines.

4. Scanning device in accordance with one of the Claims 1 to 3, **characterized in that** the reflection raster is arranged in the form of a spiral.

5. Scanning device in accordance with one of the Claims 1 to 4, **characterized in that** the reflection raster (8, 9) has color - selective properties **in that** it reflects only light of a certain wave length range or of a plurality of wave length ranges.

6. Scanning device in accordance with Claim 5, **characterized in that** the meshes (16) of the reflection raster (8, 9) comprise in each case a plurality of reflection areas with differing color-selective properties.

7. Scanning device in accordance with Claim 6, **characterized in that** the reflection areas of the individual meshes (16) are arranged concentrically or rotational symmetrically.

8. Scanning device in accordance with one of the Claims 1 to 7, **characterized in that** the main upper surface (7) of the disk (5) has a plurality of areas with different reflection rasters (8, 9).

9. Scanning device in accordance with Claim 8, **characterized in that** the main upper surface (7) of the disk (5) has a plurality of ring zones with different reflection rasters (8, 9).

10. Scanning device in accordance with one of the Claims 1 to 9, **characterized in that** the disk (5) is made out of a transparent material.

11. Scanning device in accordance with Claim 10, **characterized in that** a non-reflecting glass or quartz disk serves as the disk (5).

12. Scanning device in accordance with one of the Claims 1 to 9, **characterized in that** the absorption capacity of the disk (5) is so great that light is reflected only from the reflection raster (8, 9) of the main upper surface (7).

13. Scanning device in accordance with one of the Claims 1 to 12, **characterized in that** the reflection raster (8, 9) is designed as a coating of the main upper surface (7) of the disk (5).

14. Scanning device in accordance with Claim 13, **characterized in that** the meshes (16) of the reflection raster (8, 9) are designed as a coating spot (17, 19) that is transparent in each case for light of a certain wavelength range and otherwise reflecting.

15. Scanning device in accordance with Claim 14, **characterized in that** the meshes (16) of the reflection raster (8, 9) are formed by a plurality of overlapping coating spots (17, 19) that are transparent for light of various wavelength ranges and otherwise reflecting.

16. Scanning device in accordance with Claim 15, **characterized in that** the coating spots (17, 19) of the individual meshes (16) are applied centered one over the other on the disk (5).

17. Scanning device in accordance with one of the Claims 14 to 16, **characterized in that** the individual meshes (16) are formed through two coatings spots (17, 19) that are applied in each case centered one over the other, in which the first coating spot (17) applied on the disk (5) is transparent for short - wave light and reflects long - wave light, while the second coating spot (19) reflects short - wave and long - wave light and is designed smaller than the first coating spot (17).

18. Scanning device in accordance with one of the Claims 1 to17 , **characterized in that** at least one beam deflecting optical component (11) is arranged in the light path between the light source (3) and the eyepiece (4) on one side and the beam scanner (5) on the other side or between the beam scanner (5) and the object (10) to be investigated.

19. Scanning device in accordance with Claim 18, **characterized in that** the beam-deflecting optical component comprises a mirror, a dichroic beam splitter, and/or a compound lens (12).

20. Scanning device in accordance with Claim 19, **characterized in that** the beam passing to the beam scanner (5) and the one reflected by the beam scanner (5) go through the same compound lens (12).

21. Scanning device in accordance with one of the Claims 18 to 20, **characterized in that** the beam deflecting optical component comprises a reflecting prism (11) that is arranged in such a way that a first reflecting surface is arranged in the light path between the light source (3) and the eyepiece (4) an the one side and the beam scanner on the other side and a second reflecting surface is arranged between the beam scanner (5) and the object (10) to be investigated.

22. Scanning device in accordance with Claims 18 to 21, **characterized in that** the position of the beam scanner (5) can be changed within the scanning apparatus (1).

23. Scanning device in accordance with one of the Claims 18 to 22, **characterized in that** it is conceived as an accessory module with a housing for conventional microscopes.

24. Scanning device in accordance with one of the Claims 18 to 23, **characterized in that** a light trap or an absorber for the light transmitted through the disk (5) is provided behind the disk (5).

## Revendications

1. Dispositif de balayage (1) pour microscope confocal (2) avec au moins une source lumineuse (3), un oculaire (4) et un scanner à faisceau avec un disque (5) entraîné en rotation en tant que corps de base, au moins une surface principale (7) du disque (5) étant munie d'une trame réfléchissante (8, 9), soit seulement les zones correspondant aux mailles de la trame réfléchissante (8, 9) soit seulement les zones de la surface principale (7) correspondant à la grille de la trame réfléchissante (8, 9) réfléchissant la lumière,
**caractérisé en ce que** la source lumineuse (3), le disque (5) et l'oculaire (4) sont disposés de telle manière qu'aussi bien la lumière de la source lumineuse (3) servant à l'illumination d'un objet (10) qu'également la lumière venant de l'objet (10) à l'oculaire (4) sont réfléchies sur le scanner à faisceau.

2. Dispositif de balayage selon la revendication 1,
**caractérisé en ce que** les mailles de la trame réfléchissante (8, 9) sont ponctuelles rondes, ovales ou polygonales.

3. Dispositif de balayage selon la revendication 1,
**caractérisé en ce que** les mailles de la trame réfléchissante sont en forme de bandes ou en forme de lignes.

4. Dispositif de balayage selon l'une des revendications 1 à 3,
**caractérisé en ce que** la trame réfléchissante est disposée en forme de spirale.

5. Dispositif de balayage selon l'une des revendications 1 à 4,
**caractérisé en ce que** la trame réfléchissante (8, 9) a des propriétés de sélection de couleurs **en ce qu'**elle réfléchit seulement de la lumière d'une zone de longueur d'onde déterminée ou de plusieurs zones de longueurs d'onde déterminées.

6. Dispositif de balayage selon la revendication 5,
**caractérisé en ce que** les mailles (16) de la trame réfléchissante (8, 9) comprennent respectivement plusieurs zones réfléchissantes avec des propriétés de sélection de couleur différentes.

7. Dispositif de balayage selon la revendication 6,
**caractérisé en ce que** les zones réfléchissantes des mailles (16) individuelles sont disposées concentriques ou respectivement à symétrie de révolution.

8. Dispositif de balayage selon l'une des revendications 1 à 7,
**caractérisé en ce que** la surface principale (7) du disque (5) présente plusieurs zones avec des trames réfléchissantes (8, 9) différentes.

9. Dispositif de balayage selon la revendication 8,
**caractérisé en ce que** la surface principale (7) du disque (5) présente plusieurs zones annulaires avec des trames réfléchissantes (8, 9) différentes.

10. Dispositif de balayage selon l'une des revendications 1 à 9,
**caractérisé en ce que** le disque (5) est formé en un matériau transparent.

11. Dispositif de balayage selon la revendication 10,
**caractérisé en ce qu'**un disque en verre ou en quartz antireflet sert de disque (5).

12. Dispositif de balayage selon l'une des revendications 1 à 9,
**caractérisé en ce que** le pouvoir absorbant du disque (5) est si élevé que la lumière est réfléchie uniquement à la trame réfléchissante (8, 9) de la surface principale (7).

13. Dispositif de balayage selon l'une des revendications 1 à 12,
**caractérisé en ce que** la trame réfléchissante (8, 9) est réalisée sous forme d'enduction de la surface principale (7) du disque (5).

14. Dispositif de balayage selon la revendication 13,
**caractérisé en ce que** les mailles (16) de la trame réfléchissante (8, 9) sont réalisées sous forme d'une tache d'enduction (17, 19) transparente respectivement pour une lumière d'une zone de longueur d'onde déterminée et par ailleurs réfléchissante.

15. Dispositif de balayage selon la revendication 14,
**caractérisé en ce que** les mailles (16) de la trame réfléchissante (8, 9) sont réalisées sous forme de plusieurs taches d'enduction (17, 19) recouvrantes, transparentes respectivement pour une lumière de zones de longueur d'onde différentes et par ailleurs réfléchissantes.

16. Dispositif de balayage selon la revendication 15,
**caractérisé en ce que** les taches d'enduction (17, 19) des mailles (16) individuelles sont déposées les unes au-dessus des autres de manière centrée.

17. Dispositif de balayage selon l'une des revendications 14 à 16,
**caractérisé en ce que** les mailles (16) individuelles sont formées respectivement par deux taches d'enduction (17, 19) déposées l'une au-dessus de l'autre de manière centrée, la première tache d'enduction (17) déposée sur le disque (5) étant transparente pour une lumière de faible longueur d'onde et réfléchissant une lumière de grande longueur d'onde tandis que la seconde tache d'enduction (19) réfléchit des lumières de faible longueur d'onde et de grande longueur d'onde et est réalisée plus petite que la première tache d'enduction (17).

18. Dispositif de balayage selon l'une des revendications 1 à 17,
**caractérisé en ce qu'**au moins un composant optique (11) déflecteur de faisceau est disposé dans la marche des rayons entre la source lumineuse (3) et l'oculaire (4) d'une part et le scanner à faisceau (5) d'autre part ou entre le scanner à faisceau (5) et l'objet (10) à examiner.

19. Dispositif de balayage selon la revendication 18,
**caractérisé en ce que** le composant optique (11) déflecteur de faisceau comprend un miroir, une lame séparatrice dichroïque et/ou une structure de lentille (12).

20. Dispositif de balayage selon la revendication 19,
**caractérisé en ce que** le faisceau allant vers le scanner à faisceau (5) et le faisceau réfléchi par le scanner à faisceau (5) passent la même structure de lentille (12).

21. Dispositif de balayage selon l'une des revendications 18 à 20,
**caractérisé en ce que** le composant optique déflecteur de faisceau comprend un prisme antireflet (11) qui est disposé de telle manière qu'une première surface réfléchissante est disposée dans la marche des rayons entre la source lumineuse (3) et l'oculaire (4) d'une part et le scanner à faisceau (5) d'autre part et une seconde surface réfléchissante entre le scanner à faisceau (5) et l'objet (10) à examiner.

22. Dispositif de balayage selon l'une des revendications 18 à 21,
**caractérisé en ce que** la position du scanner à faisceau (5) est modifiable à l'intérieur du dispositif de balayage (1).

23. Dispositif de balayage selon l'une des revendications 18 à 22,
**caractérisé en ce qu'**il est conçu sous forme de module additionnel avec un carter pour des microscopes conventionnels.

24. Dispositif de balayage selon l'une des revendications 18 à 23,
**caractérisé en ce qu'**un piège à lumière ou respectivement un absorbeur pour la lumière transmise par le disque (5) est prévu derrière le disque (5).
